# EUROPEAN PATENT APPLICATION

(11) **EP 4 737 754 A1**
(43) Date of publication of application: **06.05.2026**
(21) Application number: 24822764.7
(22) Date of filing: 14.06.2024
(51) Int. Cl.: F16D 43/21, F16D 7/02, F16F 15/123, F16F 15/129, F16F 15/30

(54) **TORQUE LIMITER, DRIVE ASSEMBLY AND VEHICLE**

(30) Priority: 16.06.2023 CN 202310726717
(71) Applicant: Nanjing Valeo Clutch Co., Ltd., Nanjing, Jiangsu 211153 (CN)
(72) Inventor: HE, Yuxi, Nanjing, Jiangsu 211153 (CN)
(74) Representative: Valeo Powertrain Systems
(86) International application number: PCT/CN2024/099099
(87) International publication number: WO 2024/255816

(57) **Abstract**

The present disclosure relates to a torque limiter, comprising: a flywheel; a first axial load-bearing portion; a second axial load-bearing portion, which is fixed relative to the first axial load-bearing portion in an axial direction and is spaced therefrom by a certain distance; a torque input plate, which is fixed relative to the flywheel in a circumferential direction and drives the flywheel to rotate integrally about a rotation axis; and a driven plate configured to output torque. The torque input plate and the driven plate are axially arranged between the first and second axial load-bearing portions, with the torque input plate closer to the first axial load-bearing portion and the driven plate closer to the second axial load-bearing portion. The torque input plate and the driven plate abut against each other with a certain axial force, and the driven plate is driven to rotate about a rotation axis by means of friction between the two. The present disclosure further relates to a drive assembly comprising such a torque limiter and a vehicle comprising the drive assembly.

## Description

### TECHNICAL FIELD

The present disclosure relates to a torque limiter. In particular, the torque limiter comprises a flywheel integrated therein. The present disclosure further relates to a drive assembly comprising such a torque limiter and a vehicle comprising the drive assembly.

### BACKGROUND

The torque produced by the engine of a motor vehicle is usually inconstant and fluctuates frequently. Such inconstant torque may be transmitted to the gearbox, causing the gearbox to vibrate and thus generating particularly undesirable noise or impacts, etc. The provision of a torque fluctuation absorbing mechanism in the drivetrain of a vehicle, to reduce the adverse effects of vibration and improve vehicle driving comfort, is already known. The torque fluctuation absorbing mechanism may allow fluctuations in the torque generated by the vehicle engine to be limited and absorbed. It is known that the torque fluctuation absorbing mechanism may comprise a torsional vibration damper and a torque limiter. A torsional vibration damper usually absorbs and reduces torque fluctuations by a spring structure, while a torque limiter can limit a torque fluctuation that exceeds the maximum torque allowed by the torsional vibration damper. Specifically, when a torque fluctuation exceeds the maximum allowable torque, the torque limiter slides, thereby limiting the transmitted torque.

In the prior art, a flywheel fixed to a crankshaft of the vehicle engine is an upstream component of the torque limiter in the vehicle drivetrain. The torque limiter is fixed to and driven by the flywheel. The flywheel and the torque limiter are of a separate structure. During installation, the flywheel is first fixed to the engine crankshaft by bolts or other fasteners, and then the torque limiter is fixed to the flywheel by bolts. This separate configuration of the flywheel and torque limiter requires two separate steps for installation of the flywheel and torque limiter, increasing the assembly process. Furthermore, this separate configuration increases the number of parts in the torque limiter, leading to the increase of material costs.

Therefore, existing torque limiters and flywheels have the disadvantages of having a large number of parts, high cost, and complicated assembly.

### SUMMARY OF THE INVENTION

Therefore, the present disclosure is intended to solve the above problems existing in the existing torque limiters and flywheels, and an objective thereof is to provide a torque limiter which comprises a flywheel integrated therein, has a compact and robust configuration, and can be manufactured and assembled in a simple and cost-saving manner.

The objective is achieved by a torque limiter according to an embodiment of the present disclosure, comprising: a flywheel; a first axial load-bearing portion; a second axial load-bearing portion, which is fixed relative to the first axial load-bearing portion in an axial direction and is spaced therefrom by a certain distance; a torque input plate, which is fixed relative to the flywheel in a circumferential direction and drives the flywheel to rotate integrally about a rotation axis; and a driven plate configured to output torque. The torque input plate and the driven plate are axially arranged between the first axial load-bearing portion and the second axial load-bearing portion, with the torque input plate being arranged closer to the first axial load-bearing portion, and the driven plate being arranged closer to the second axial load-bearing portion. The torque input plate and the driven plate abut against each other with a certain axial force, and the torque input plate drives the driven plate to rotate about the rotation axis by means of friction between the torque input plate and the driven plate.

The torque limiter according to the present disclosure comprises a flywheel integrated therein, so that the flywheel can be simultaneously mounted in a single assembly operation of mounting the torque limiter, thereby eliminating one assembly step. In the present disclosure, the flywheel is driven by the torque input plate of the torque limiter. In the prior art, the flywheel is directly driven by the engine crankshaft, and the torque limiter is then driven by the flywheel. The drive assembly according to the present disclosure has a power transmission path that differs from that of the prior art. The torque input plate of the torque limiter further drives the driven plate configured to output the torque by means of friction. Relative sliding can occur between the torque input plate and the driven plate to limit the torque transmitted. The torque input plate simultaneously drives both the flywheel and the driven plate, thereby reducing the number of components in the drive assembly.

The drive assembly according to the present disclosure may also have one or more of the following features, alone or in combination.

According to one embodiment of the present disclosure, the torque limiter further comprises an elastic member axially arranged between the first axial load-bearing portion and the second axial load-bearing portion, and the elastic member biases one of the torque input plate and the driven plate toward the other of the torque input plate and the driven plate. The biasing force of the elastic member can increase the friction between the torque input plate and the driven plate to adjust the maximum torque that the torque limiter can transmit.

According to one embodiment of the present disclosure, the torque input plate comprises a plurality of transmission teeth extending radially outward or axially from an outer periphery thereof, and the torque input plate drives the flywheel through the transmission teeth. The transmission teeth of the torque input plate allow them to be fixed relative to the flywheel in the circumferential direction, while not obstructing the placement of the torque input plate between the first axial load-bearing portion and the second axial load-bearing portion during assembly.

According to one embodiment of the present disclosure, the torque input plate comprises an inner plate and an outer plate fastened together, the outer plate is located on a radially outer side of the inner plate, and the transmission teeth are located at an outer periphery of the outer plate.

According to one embodiment of the present disclosure, the elastic member is arranged between the first axial load-bearing portion and the torque input plate; or the elastic member is arranged between the driven plate and the second axial load-bearing portion.

According to one embodiment of the present disclosure, the torque limiter further comprises a friction lining arranged on at least one of two axial sides adjacent to the driven plate. When the torque limiter is in operation, the torque input plate, the first and second axial load-bearing portions, and the flywheel rotate together, forming the torque input side. Torque is transmitted from the input side to the driven plate through the friction lining. When the torque input through the torque input plate exceeds the maximum torque that the torque limiter can transmit, sliding occurs between the friction lining and the driven plate, thereby providing the function of eliminating torque fluctuations.

According to one embodiment of the present disclosure, the torque limiter further comprises an intermediate plate, and the intermediate plate comprises: a first ring, wherein the first ring is fastened to the flywheel; and a plurality of connecting strips, wherein the connecting strips are integrally formed with the first ring. At least a portion of the connecting strip extends axially, and the transmission teeth of the torque input plate are able to be inserted between two adjacent connecting strips.

According to the technical solution, the transmission teeth of the torque input plate can abut against the connecting strip of the intermediate plate, thereby transmitting the torque to the intermediate plate, and then transmitting the torque to the flywheel through the integrally formed first ring, thereby realizing the torque transmission between the torque input plate and the flywheel.

According to one embodiment of the present disclosure, the first ring comprises a ring body and a plurality of first teeth, and each first tooth is arranged in a circumferential direction between two adjacent connecting strips.

According to one embodiment of the present disclosure, the ring body is fastened to the flywheel, and the first teeth are arranged on an inner periphery of the ring body and form one of the first axial load-bearing portion or the second axial load-bearing portion of the torque limiter.

According to one embodiment of the present disclosure, the ring body is fastened to the flywheel, the first teeth are arranged on an inner periphery of the ring body fastened to the flywheel, and the ring body forms one of the first axial load-bearing portion or the second axial load-bearing portion of the torque limiter.

According to one embodiment of the present disclosure, the first teeth are spaced from the ring body in an axial direction by a certain distance, and are connected to the ring body through bent portions.

According to one embodiment of the present disclosure, the intermediate plate further comprises a second ring, the second ring is spaced from the first ring in an axial direction by a certain distance and integrally formed with the connecting strip, and the second ring forms the other of the first axial load-bearing portion and the second axial load-bearing portion of the torque limiter. That is, the elastic member, the torque input plate, and the driven plate are clamped between the ring body or first teeth of the first ring and the second ring.

According to one embodiment of the present disclosure, the connecting strip comprises a radial extension section, the radial extension section is spaced from the first ring in an axial direction by a certain distance, and the radial extension section forms the other of the first axial load-bearing portion and the second axial load-bearing portion of the torque limiter. That is, the elastic member, the torque input plate, and the driven plate are clamped between the ring body of the first ring and the radial extension section of the connecting strip.

According to one embodiment of the present disclosure, the flywheel comprises a body portion and a flange portion extending radially inward from the body portion, and the flange portion forms one of the first axial load-bearing portion or the second axial load-bearing portion of the torque limiter.

According to one embodiment of the present disclosure, the flywheel further comprises a support protrusion extending radially inward from the body portion, the support protrusion is spaced from the flange portion in an axial direction by a certain distance, and the support protrusion forms the other of the first axial load-bearing portion or the second axial load-bearing portion of the torque limiter. That is, the elastic member, the torque input plate, and the driven plate are clamped between the flange portion of the flywheel and the support protrusion.

According to one embodiment of the present disclosure, the torque limiter further comprises a carrier plate fastened together with the flywheel, the carrier plate is spaced from the flange portion in an axial direction by a certain distance, and the carrier plate forms the other of the first axial load-bearing portion or the second axial load-bearing portion of the torque limiter. That is, the elastic member, the torque input plate, and the driven plate are clamped between the flange portion of the flywheel and the carrier plate.

According to one embodiment of the present disclosure, the flywheel comprises connecting holes arranged on the flange portion, and the transmission teeth extend axially from the outer periphery of the torque input plate and are able to be inserted into the connecting holes, so that the torque input plate is fixed relative to the flywheel in a circumferential direction. That is, the transmission teeth of the torque input plate cooperate with the connecting hole to realize torque transmission between the torque input plate and the flywheel.

According to one embodiment of the present disclosure, the flywheel comprises connecting grooves arranged on an inner periphery of the body portion, and the transmission teeth extend radially from the outer periphery of the torque input plate and are able to be inserted into the connecting grooves, so that the torque input plate is fixed relative to the flywheel in a circumferential direction. That is, the transmission teeth of the torque input plate cooperate with the connecting groove to realize torque transmission between the torque input plate and the flywheel.

According to one embodiment of the present disclosure, at least one of the plurality of support protrusions is provided with an anti-rotation groove.

According to one embodiment of the present disclosure, the elastic member has a plurality of outer peripheral teeth, each outer peripheral tooth is supported by one support protrusion, and one outer peripheral tooth among the outer peripheral teeth presses against a bottom surface of the anti-rotation groove. According to the technical solution, if relative sliding in the circumferential direction occurs between the elastic member and the flywheel, the outer peripheral teeth can abut against the side wall of the anti-rotation groove, preventing excessive sliding of the elastic member. Therefore, the anti-rotation groove functions to limit the relative sliding between the elastic member and the flywheel in the circumferential direction.

According to one embodiment of the present disclosure, the outer peripheral teeth of the elastic member have dimensions that enable the outer peripheral teeth to pass through space between adjacent support protrusions in an axial direction, and the elastic member is able to rotate by an angle in a circumferential direction during assembly, so that the outer peripheral teeth are supported on the support protrusions.

According to one embodiment of the present disclosure, the transmission teeth extend radially from the outer periphery of the torque input plate, each transmission tooth is supported by one support protrusion, and one transmission tooth among the plurality of transmission teeth presses against a bottom surface of the anti-rotation groove. According to the technical solution, the torque input plate realizes relative fixation with the flywheel in the circumferential direction through the cooperation between the transmission teeth and the anti-rotation groove. The transmission teeth of the torque input plate can abut against the side wall of the anti-rotation groove, realizing torque transmission between the torque input plate and the flywheel.

According to one embodiment of the present disclosure, the transmission teeth have dimensions that enable the transmission teeth to pass through space between adjacent support protrusions in an axial direction, and the torque input plate is able to rotate by an angle in a circumferential direction during assembly, so that the transmission teeth are supported on the support protrusions.

According to one embodiment of the present disclosure, the torque limiter further comprises two carrier plates that are fastened together with the flywheel on two axial sides of the flywheel, respectively, and the two carrier plates form a first load-bearing portion and a second bearing portion of the torque limiter, respectively. That is, the elastic member, the torque input plate, and the driven plate are clamped between the two carrier plates.

According to one embodiment of the present disclosure, at least one of the two carrier plates is provided with transmission holes, and the transmission teeth extend axially from the outer periphery of the torque input plate and are able to be inserted into the transmission holes, so that the torque input plate is fixed relative to the flywheel in a circumferential direction. Thus, the transmission teeth of the torque input plate cooperate with the transmission hole to realize torque transmission between the torque input plate and the flywheel.

According to one embodiment of the present disclosure, the flywheel comprises connecting grooves arranged on an inner periphery of the body portion thereof, and the transmission teeth extend radially from the outer periphery of the torque input plate and are able to be inserted into the connecting grooves, so that the torque input plate is fixed relative to the flywheel in a circumferential direction. Thus, the transmission teeth of the torque input plate cooperate with the connecting groove to realize torque transmission between the torque input plate and the flywheel.

The present disclosure further relates to a drive assembly comprising the torque limiter as described above and a torsional vibration damper. The torsional vibration damper comprises an input portion, an output portion, and a spring arranged to be circumferentially compressed between the input portion and the output portion. The input portion of the torsional vibration damper is fastened together with the driven plate of the torque limiter, or the input portion of the torsional vibration damper is integrally formed with the driven plate of the torque limiter.

According to one embodiment of the present disclosure, the torsional vibration damper comprises a through hole, and a fastener is allowed to pass through the through hole to fasten the torque input plate of the torque limiter to an upstream component of the drive assembly.

The present disclosure further relates to a vehicle, comprising the drive assembly as described above.

### Brief Description of the Drawings

The foregoing and other features and advantages of the present disclosure will become more apparent from the following detailed description of exemplary embodiments with reference to the drawings, and the description and the drawings are for illustrative purposes only and are not intended to limit the scope of the present disclosure in any way. The drawings below are not drawn to scale according to actual dimensions but rather focus on showing the main purpose of the present disclosure. In the figures:
Fig. 1 is a schematic view of a drive assembly according to one embodiment of the present disclosure.
Fig. 2 is an exploded view of the drive assembly according to the one embodiment of the present disclosure.
Fig. 3 is a cross-sectional view of the drive assembly according to the one embodiment of the present disclosure.
Fig. 4 is an enlarged view of a portion of Fig. 3, in which a torsion limiter is shown in detail.
Fig. 5 shows in detail a portion of an intermediate plate of a torsion limiter in the embodiment shown in Fig. 3.
Fig. 6 shows a torque input plate in the embodiment shown in Fig. 3.
Fig. 7 is a schematic view of the cooperation between transmission teeth of the torque input plate and connecting strips of the intermediate plate.
Fig. 8 is a partial cross-sectional view of a torque limiter according to another embodiment of the present disclosure.
Fig. 9 shows in detail a portion of a flywheel in the embodiment shown in Fig. 8.
Fig. 10 shows an elastic member of the embodiment shown in Fig. 8.
Fig. 11 shows a torque input plate in the embodiment shown in Fig. 8.
Fig. 12 is a partial cross-sectional view of a torque limiter according to still another embodiment of the present disclosure.
Fig. 13 shows a flywheel in the embodiment shown in Fig. 12.

In the drawings, identical or similar components are indicated by identical reference numerals.

### Detailed Description of Embodiments

To clarify the objective, technical solutions and advantages of embodiments of the present disclosure, the technical solutions of the embodiments of the present disclosure are described clearly and completely below in conjunction with the drawings of the embodiments of the present disclosure.

Unless defined otherwise, the technical or scientific terms used herein shall have the common meanings as understood by those of ordinary skill in the field to which the present disclosure belongs. Words such as "one", "a" or "the" used in the description and the claims of the patent application disclosed herein do not indicate a quantity limit, but mean that there is at least one. "Comprise", "include" or any other similar term means that the element or object appearing before the term covers the elements or objects and equivalents thereof listed after the term but does not exclude other elements or objects. "Axial direction", "radial direction", "circumferential direction", and other directions are defined relative to a rotation axis X of the torque limiter, wherein the axial direction is the direction of extension of the rotation axis X, the radial direction is the direction perpendicular to the rotation axis X, and the circumferential direction is the direction of a circumference around the rotation axis X.

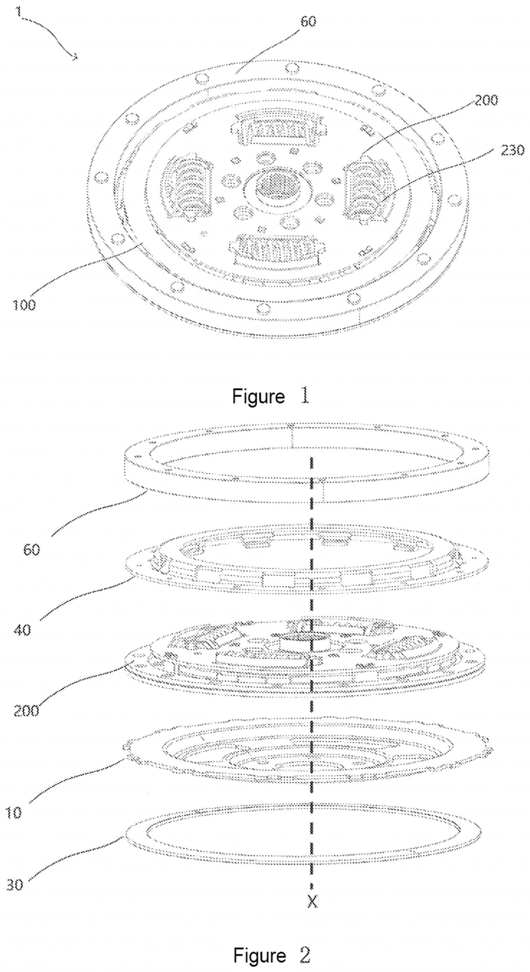

Fig. 1 is a schematic view of a drive assembly 1 according to one embodiment of the present disclosure. Fig. 2 is an exploded view of the drive assembly shown in Fig. 1.

The drive assembly 1 may be configured to transmit torque between an engine and a gearbox of a motor vehicle. The drive assembly 1 may be divided into two parts: a torque limiter 100 and a torsional vibration damper 200. The torque limiter 100 is connected to a crankshaft of the vehicle engine and is driven by the crankshaft to transmit torque around an axis of rotation X. The torsional vibration damper 200 is located inside the torque limiter 100 as a whole, and the torque transmitted by the torque limiter 100 is outputted by the torsional vibration damper to the gearbox of the motor vehicle. The torque limiter 100 has a predetermined maximum torque; even if the torque generated by the engine exceeds the maximum torque, the torque transmitted to the torsional vibration damper 200 will not exceed the maximum torque.

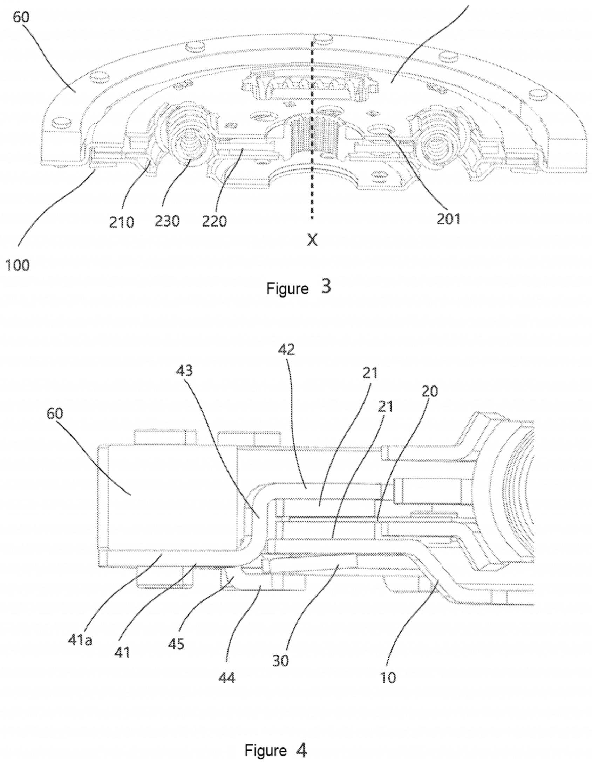

Referring to Fig. 3, the torsional vibration damper 200 has an input portion 210, an output portion 220, and four springs 230 arranged to be compressed between the input portion 210 and the output portion 220 in the circumferential direction. The input portion 210 is fixed to a driven plate 20 of the torque limiter 100, or integrally formed with the driven plate 20, so as to receive torque transmitted from the torque limiter 100. The spring 230 is a coil spring, of which one end is acted on by the input portion 210 and the other end acts on the output portion 220, so as to transmit torque from the input portion 210 to the output portion 220. The spring 230 can absorb and reduce fluctuations in torque by being compressed and extending. It is conceivable that the driven plate 20 of the torque limiter 100 may also be fixed to the output portion 220 of the torsional vibration damper 200. The torsional vibration damper 200 comprises a through hole 201, and a fastener such as a bolt is allowed to pass through the through hole 201 to fasten the torque input plate 10 of the torque limiter 100 to an upstream component of the drive assembly 1, such as the crankshaft of the engine.

Referring further to Figs. 1 and 2, and in conjunction with Figs. 3 to 7, the torsion limiter 100 comprises a flywheel 60, a torque input plate 10, a driven plate 20, an elastic member 30, and an intermediate plate 40. The torque input plate 10 is connected radially inward to the upstream component such as the engine crankshaft. Thus, the torsion limiter 100 receives torque from the engine through the torque input plate 10. The torque input plate 10 needs to be connected to the engine crankshaft and is therefore located closer to the engine side (lower side in Fig. 4) than the driven plate 20 configured to output torque.

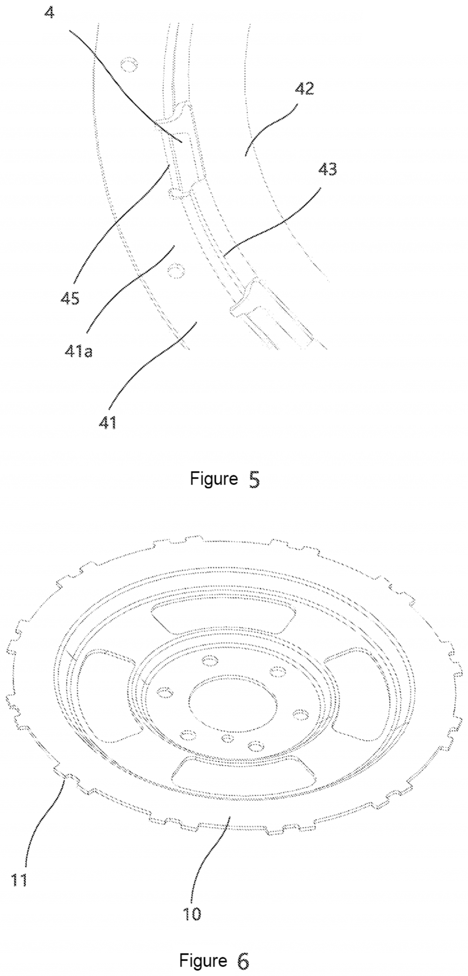

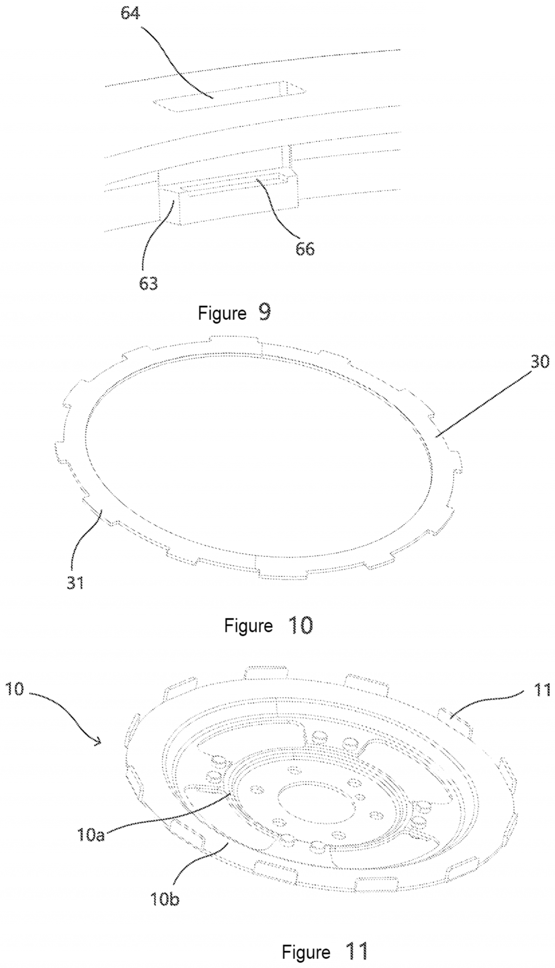

The flywheel 60 is in the form of an inertia ring, which is fixed in the circumferential direction relative to the torque input plate 10, and is driven by the torque input plate 10 to rotate about the rotation axis X. The flywheel 60 has a large moment of inertia, and may be configured to absorb the fluctuations in the engine torque output, making its torque output more uniform. Referring to Fig. 6, a plurality of transmission teeth 11 extending radially outwardly are provided on the outer periphery of the torque input plate 10, and may be configured to drive the flywheel 60. Referring also to Fig. 11, it shows a torque input plate 10 consisting of an inner plate 10a and an outer plate 10b which are fastened together. The outer plate 10b is located on the radially outer side of the inner plate 10a, and the transmission teeth 11 are located on the outer periphery of the outer plate 10b. The inner plate 10a and the outer plate 10b may have different material properties. For example, the inner plate 10a may be heat-treated to have higher strength.

The radially inner portion of the driven plate 20 is fixedly connected to the input portion 210 of the torsional vibration damper 200, and its radially outer portion abuts against the torque input plate 10 with a certain axial force. In the embodiment shown in Fig. 4, friction linings 21 are arranged adjacent to the driven plate 20 on two axial sides of the driven plate 20. Therefore, the driven plate 20 is in contact with and interacts with the friction linings 21 on its two axially opposite surfaces. In other embodiments not shown in the drawings, the friction lining 21 may be arranged only on one of the two axial sides of the driven plate 20. Another conceivable technical solution is that no friction lining 21 is provided at all, and instead, the surface of the torque input plate 10 or the driven plate 20 is treated to make it suitable for transmitting a certain torque.

When the drive assembly is operating, the vehicle's engine drives the torque input plate 10, and the torque input plate 10 in turn drives the flywheel 60 to rotate about the rotation axis X through the transmission teeth 11. Through the direct friction between the torque input plate 10 and the driven plate 20, or the indirect friction generated by the friction lining 21, the torque input plate 10 can also drive the driven plate 20 and the input portion 210 of the torsional vibration damper 200 to rotate about the rotation axis X, thereby realizing torque transmission to the torsional vibration damper 200. When the torque transmitted from the engine to the torque limiter 100 reaches or exceeds the maximum torque of the torque limiter 100, sliding occurs between the driven plate 20 and the torque input plate 10, thereby limiting the torque transmitted to the torsional vibration damper 200 to the maximum torque of the torque limiter 100.

To enable the torque input plate 10 and the driven plate 20 to abut against each other, the torque limiter 100 needs to comprise two axial load-bearing portions, with the torque input plate 10 and the driven plate 20 axially arranged between the two axial load-bearing portions. Without loss of generality, in the present disclosure, the axial load-bearing portion closer to the torque input plate 10 may be referred to as a first axial load-bearing portion, and the axial load-bearing portion closer to the driven plate 20 may be referred to as a second axial load-bearing portion.

The greater the friction between the torque input plate 10 and the driven plate 20, the greater the maximum torque that the torque limiter 100 can transmit. Increasing the axial force between the torque input plate 10 and the driven plate 20 against each other can increase the friction between the two. Thus, the torsion limiter 100 comprises an elastic member 30 axially arranged between the first axial load-bearing portion and the second axial load-bearing portion. The elastic member 30 may be in the form of a plate spring, which is supported by the first axial load-bearing portion or the second axial load-bearing portion, and axially presses against the torque input plate 10 toward the driven plate 20, or axially presses against the driven plate 20 toward the torque input plate 10. Optionally, the torque input plate 10 may be formed by an elastic material, so that the torque input plate 10 itself can generate an axial force pushing the driven plate 20 toward the second ring 42, thereby eliminating the need to provide a dedicated elastic member.

In the embodiments shown in Figs. 4-7, the first axial load-bearing portion and the second ring 42 of the torsion limiter 100 are provided by an intermediate plate 40. As will be described in detail below, the intermediate plate 40 can also function to transmit torque from the torque input plate 10 to the flywheel 60.

Referring to Figs. 4 and 5, the intermediate plate 40 is integrally formed, and comprises a first ring 41, a second ring 42, and a plurality of connecting strips 43 connecting the two to each other. The first ring 41 is fastened to the flywheel 60, and comprises a ring body 41a and a plurality of first teeth 44. The ring body 41a comprises a plurality of evenly distributed through holes. The through holes are configured to fasten the first ring 41 to the flywheel 60 by screws (not shown) or the like. The second ring 42 is integrally formed with the first ring 41 and thus rotates together with the first ring 41 about the rotation axis X. The second ring 42 and the first ring 41 are spaced apart by a predetermined distance in the axial direction. Furthermore, the inner diameter of the ring body 41a of the first ring 41 is larger than the outer diameter of the second ring 42, so that the projection of the body portion 41a of the first ring 41 in the axial direction is outside the second ring 42.

The driven plate 20 is slidably clamped between the second ring 42 and the torque input plate 10 by an elastic member 30 arranged axially between the first ring 41 and the torque input plate 10. The torque input plate 10 and the driven plate 20 are located between the first teeth 44 of the first ring 41 and the second ring 42 in the axial direction. The first teeth 44 and the second ring 42 form two axial load-bearing portions of the torque limiter 100. In the embodiment shown in Fig. 4, the first teeth 44 form a first axial load-bearing portion of the torque limiter 100, and the second ring 42 forms a second axial load-bearing portion of the torque limiter 100.

The second ring 42 and the first ring 41 are connected to each other through a plurality of connecting strips 43. Specifically, referring to Fig. 5, one end of the connecting strip 43 is connected to the radially inner side of the first ring 41 and extends axially to the height of the second ring 42, being connected to the radially outer side of the second ring 42. The inner diameter of the first ring 41 is larger than the outer diameter of the second ring 42. In the circumferential direction, the plurality of connecting strips 43 of the first ring 41 are evenly distributed. The first tooth 44 is located between two adjacent connecting strips 43 on the inner periphery of the ring body 41a, and is spaced from the ring body 41a in the radial direction by a certain distance. Moreover, the first tooth is connected to the ring body 41a through bent portions 45, so that it is located on the inner side of the ring body 41a in the radial direction. Before assembling the torque limiter 100, the first tooth 44 may extend axially from the ring body 41a. The bent portion 45 is formed by bending the first tooth 44 during the assembly of the torque limiter 100. Thus, the first tooth 44 does not hinder the assembly of the torque input plate 10, the driven plate 20 and/or the elastic member 30, etc. in the axial direction, and can support the elastic member 30 after assembly, so that the torque input plate 10, the driven plate 20 and/or the elastic member 30 are clamped between the first tooth 44 and the second ring 42.

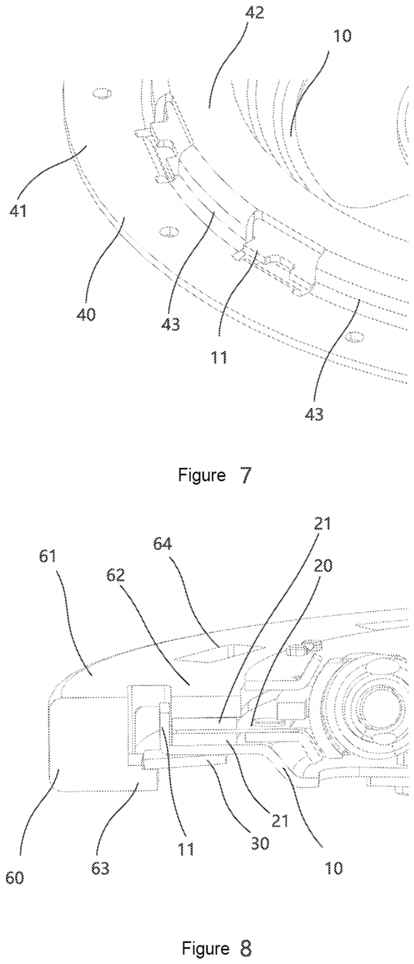

Fig. 7 shows the cooperation between the torque input plate 10 and the intermediate plate 40. As shown in the figure, in the assembly configuration of the torque limiter 100, the transmission tooth 11 of the torque input plate 10 extends radially and is inserted between two adjacent connecting strips 43. In other words, the angular position of the transmission tooth 11 approximately coincides with the first tooth 44. If relative sliding occurs between the torque input plate 10 and the intermediate plate 40, the transmission tooth 11 will abut against the side wall of the connecting strip 43, preventing further sliding of the torque input plate 10. Therefore, the transmission teeth 11 cause the torque input plate 10 to be relatively fixed to the intermediate plate 40 in the circumferential direction and to the flywheel 60 through the fastened connection between the intermediate plate 40 and the flywheel 60. This also realizes torque transmission from the torque input plate 10 to the flywheel 60. In the embodiment shown in Fig. 7, the width of the transmission tooth 11 is approximately equal to the width of the spacing between two adjacent connecting strips 43 to eliminate relative sliding as much as possible. As can be understood by those skilled in the art, the width of the transmission tooth 11 may also be smaller than the width of the spacing between the two connecting strips 43.

With the above configuration, the torque input plate 10, the intermediate plate 40, and the flywheel 60 of the torque limiter 100 are circumferentially relatively fixed and rotate together, thereby collectively forming the input side of the torque limiter 100. The torque output from the torque limiter 100 to the torsional vibration damper 200 is realized through the driven plate 20.

The intermediate plate 40 shown in Fig. 4 provides two axial load-bearing portions for the torque limiter 100 through the first ring 41 and the second ring 42, and the torque input plate 10 can drive the flywheel 60 to rotate through the connecting strips 43. It is conceivable that the intermediate plate 40 may have a structure that is different from that shown in Fig. 4. For example, the positions of the first ring 41 and the second ring 42 in the axial direction may be reversed, so that the first ring 41 is connected to the flywheel 60 on the axially upward side, the elastic member 30 is supported on the second ring 42, and the driven plate 20 presses against the first teeth 44 of the first ring 41. In this case, the second ring 42 forms a first axial load-bearing portion of the torque limiter 100, and the first teeth 44 form a second axial load-bearing portion of the torque limiter 100.

The intermediate plate 40 may also exclude the second ring. In such a configuration, the connecting strip 43 comprises a radial extension section located at the end of the connecting strip 43 away from the first ring 41, thereby being spaced from the first ring 41 in the axial direction by a certain distance. The radial extension sections of the plurality of connecting strips 43 are not connected through the ring body. The torque input plate 10, the elastic member 30, and the driven plate 20 may be clamped between the first teeth 44 and the radial extension section. In this case, the first teeth 44 and the radial extension section form the first axial load-bearing portion and the second axial load-bearing portion of the torque limiter 100, respectively.

Furthermore, for an embodiment where the connecting strip 43 comprises a radial extension section, the radial positional relationship between the ring body 41a and the first teeth 44 of the first ring 41 may also be different. That is, the first teeth 44 may be arranged on the outer periphery of the ring body 41a and fastened to the flywheel 60, and the ring body 41a is located on the radially inner side of the flywheel 60. With this configuration, the radial extension section of the connecting strip 43 can be formed by bending the connecting strip 43 with a workpiece during the assembly of the torque limiter 100, thereby not hindering the assembly of the torque input plate 10, the driven plate 20, and/or the elastic member 30, etc. in the axial direction. In this case, the ring body 41a and the radial extension section form the first axial load-bearing portion and the second axial load-bearing portion of the torque limiter 100, respectively.

The axial load-bearing portion and torque transmission function of the torque limiter 100 may also be provided by other components, thereby omitting the intermediate plate 40. Figs. 8 to 13 show different embodiments of the torque limiter 100 excluding the intermediate plate 40. The following description will focus primarily on aspects that differ from the embodiments shown in Figs. 4 to 7.

In the embodiment shown in Fig. 8, the flywheel 60 of the torque limiter 100 comprises a body portion 61 and a flange portion 62 and a support protrusion 63 extending radially inward from the body portion 61. Referring further to Fig. 9, the support protrusion 63 is spaced from the flange portion 62 in the axial direction by a certain distance. The torque input plate 10 and the driven plate 20 are arranged between the support protrusion 63 and the flange portion 62 in the axial direction. The support protrusion 63 and the flange portion 62 form two axial load-bearing portions of the torque limiter 100. In the embodiment shown in Fig. 8, the support protrusion 63 forms the first axial load-bearing portion of the torque limiter 100, and the flange portion 62 forms the second axial load-bearing portion of the torque limiter 100. It is conceivable that the positions of the flange portion 62 and the support protrusion 63 of the flywheel 60 in the axial direction may also be reversed, that is, the flange portion 62 forms the first axial load-bearing portion of the torque limiter 100, and the support protrusion 63 forms the second axial load-bearing portion of the torque limiter 100.

The flywheel 60 may also comprise connecting portions that are directly connected to the transmission teeth 11 of the torque input plate 10, so that the torque input plate 10 directly transmits torque to the flywheel 60.

Specifically, referring to Figs. 9 and 11, the flywheel 60 comprises connecting holes 64 disposed on the flange portion 62. The transmission teeth 11 of the torque input plate 10 extend axially from its outer periphery and can be inserted into the connecting holes 64. If relative sliding occurs between the torque input plate 10 and the flywheel 60, the transmission teeth 11 will abut against the side wall of the connecting hole 64, preventing further sliding of the torque input plate 10. Therefore, the engagement between the transmission teeth 11 and the connecting holes 64 fixes the torque input plate 10 relative to the flywheel 60 in the circumferential direction, and realizes torque transmission from the torque input plate 10 to the flywheel 60. The width of the transmission teeth 11 is approximately equal to the width of the connecting holes 64 to eliminate relative sliding as much as possible. Optionally, the width of the transmission teeth 11 may also be smaller than the width of the spacing between the connecting holes 64.

Referring to Figs. 8 to 10, the elastic member 30 has a plurality of outer peripheral teeth 31 on its outer periphery. Each outer peripheral tooth 31 is supported by one support protrusion 63. The support protrusion 63 is provided with an anti-rotation groove 66. In the assembly configuration of the torque limiter 100, the outer peripheral tooth 31 of the elastic member 30 presses against the bottom surface of the anti-rotation groove 66, that is, the bottom surface of the anti-rotation groove 66 provides axial support for the elastic member 30. On the other hand, the anti-rotation groove 66 defines the angular position of the elastic member 30. When relative sliding in the circumferential direction occurs between the elastic member 30 and the first ring 41, the outer peripheral tooth 31 will abut against the side wall of the anti-rotation groove 66, preventing excessive sliding of the elastic member 30. In the illustrated example, the width of the anti-rotation groove 66 is approximately equal to the width of the outer peripheral teeth 31 to eliminate relative sliding as much as possible.

To enable the elastic member 30 to be supported on the support protrusion 63, the dimensions of the support protrusion 63 need to be specially designed. Specifically, in Fig. 8, the diameters of the torque input plate 10 and the driven plate 20 should be smaller than the diameter corresponding to the innermost radial portion of the support protrusion 63, so that it is suitable for axially passing through the support protrusion 63. The diameter of the body portion of the elastic member 30 is also smaller than the diameter corresponding to the innermost radial portion of the support protrusion 63, and its outer peripheral teeth 31 have dimensions that allow them to pass through the space between adjacent support protrusions 63 in the axial direction. Thus, during the assembly of the torque limiter, the angular position of the elastic member 30 is first adjusted so that the outer peripheral teeth 31 correspond to the gaps between the support protrusions 63 in the circumferential direction, and then the elastic member 30 is moved in the axial direction. Due to the above dimensional settings, the outer peripheral teeth 31 are not obstructed by the support protrusions 63. Thus, the elastic member 30 passes over the support protrusions 63 in the axial direction and abuts against the torque input plate 10. Then, the elastic member 30 can be rotated to adjust the angular position of the elastic member 30 so that the outer peripheral teeth 31 press against the bottom surface of the anti-rotation groove 66.

In an embodiment not shown, the elastic member 30 may also be supported on the flange portion 62 of the flywheel 60. In this case, the torque input plate 10 may comprise a plurality of transmission teeth 11 extending radially from its outer periphery. Each transmission tooth 11 is supported by one support protrusion 63, and one transmission tooth 11 among the plurality of transmission teeth 11 presses against the bottom surface of the anti-rotation groove 66. When relative sliding in the circumferential direction occurs between the torque input plate 10 and the flywheel 60, the transmission tooth 11 will abut against the side wall of the anti-rotation groove 66, preventing excessive sliding of the torque input plate 10. Therefore, the engagement between the transmission tooth 11 and the anti-rotation groove 66 fixes the torque input plate 10 relative to the flywheel 60 in the circumferential direction and realizes the torque transmission from the torque input plate 10 to the flywheel 60. Similarly, the transmission teeth 11 have dimensions that enable them to pass through space between adjacent support protrusions 63 in the axial direction. During assembly, the torque input plate 10 first moves axially to pass over the support protrusions 63, and then rotates in the circumferential direction by an angle, so that the transmission teeth 11 are supported on the support protrusions 63.

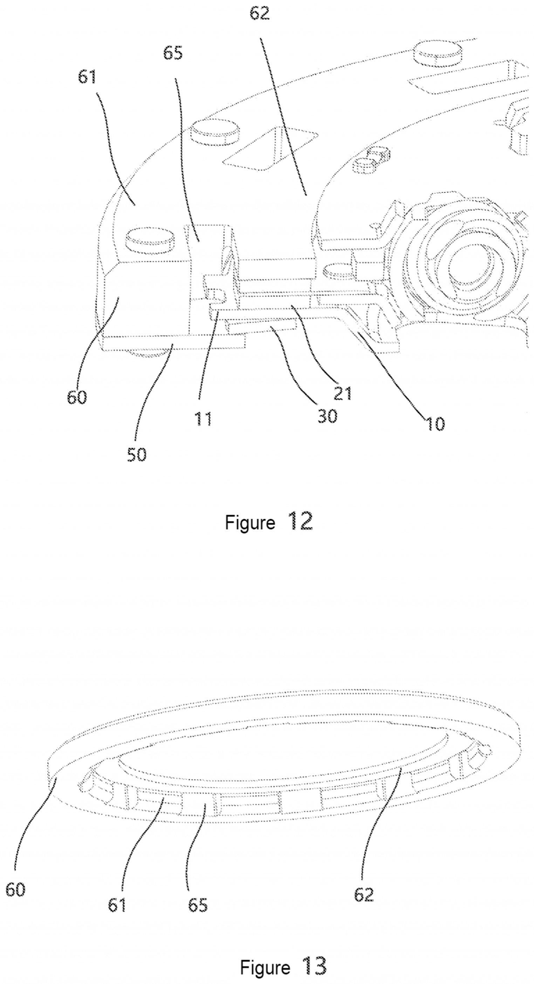

The flywheel 60 of the torque limiter 100 may also exclude the support protrusions, and instead, provides an axial load-bearing function through a carrier plate 50 fastened to the flywheel 60. This is shown in the embodiments shown in Figs. 12 and 13. In the embodiment shown in Fig. 12, the torque limiter 100 comprises a carrier plate 50 fastened together with the flywheel 60, which is spaced from the flange portion 62 in the axial direction by a certain distance. The torque input plate 10 and the driven plate 20 are axially arranged between the carrier plate 50 and the flange portion 62. The carrier plate 50 and the flange portion 62 form two axial load-bearing portions of the torque limiter 100. In the embodiment shown in Fig. 12, the carrier plate 50 forms the first axial load-bearing portion of the torque limiter 100, and the flange portion 62 forms the second axial load-bearing portion of the torque limiter 100. It is conceivable that the positions of the carrier plate 50 and the flange portion 62 in the axial direction may also be reversed, that is, the flange portion 62 forms the first axial load-bearing portion of the torque limiter 100. The carrier plate 50 forms the second axial load-bearing portion of the torque limiter 100. The carrier plate 50 may be an integrally formed ring-shaped plate or be composed of multiple separate arc-shaped ring sections.

In the embodiments shown in Figs. 12 and 13, the flywheel 60 comprises connecting grooves 65 on the inner periphery of the body portion 61. The transmission teeth 11 extend radially from the outer periphery of the torque input plate 10 and can be inserted into the connecting grooves 65, thereby fixing the torque input plate 10 relative to the flywheel 60 in the circumferential direction. If relative sliding occurs between the torque input plate 10 and the flywheel 60, the transmission teeth 11 will abut against the side walls of the connecting grooves 65, preventing further sliding of the torque input plate 10. Therefore, the engagement between the transmission teeth 11 and the connecting grooves 65 fixes the torque input plate 10 relative to the flywheel 60 in the circumferential direction, and realizes torque transmission from the torque input plate 10 to the flywheel 60. The width of the transmission tooth 11 is approximately equal to the width of the connecting groove 65 to eliminate relative sliding as much as possible. Optionally, the width of the transmission teeth 11 may also be smaller than the width of the spacing between the connecting holes 64. In an embodiment not shown, transmission holes may also be provided on the carrier plate 50. The transmission teeth 11 extend axially from the outer periphery of the torque input plate 10 and can be inserted into the transmission holes, so that the torque input plate 10 is fixed relative to the flywheel 60 in the circumferential direction, and the torque transmission from the torque input plate 10 to the flywheel 60 is realized.

Although not shown in the drawings, the axial load-bearing function of the torque limiter 100 can also be provided solely by the carrier plate 50 fastened to the flywheel 60. In such an embodiment, the flywheel 60 may not comprise the flange portion, and instead, the torque limiter 100 comprises two carrier plates 50 fastened to the flywheel 60 on two axial sides of the flywheel 60, respectively. The two carrier plates 50 form the first load-bearing portion and the second load-bearing portion of the torque limiter 100. Torque transmission between the torque input plate 10 and the flywheel 60 can be realized by inserting axially extending transmission teeth 11 into transmission holes provided on the carrier plates 50, or by inserting radially extending transmission teeth 11 into connecting grooves 65 provided on the flywheel 60, which will not be described in detail here.

Certain features, structures or characteristics in one or more embodiments of the present disclosure may be combined appropriately.

The above is a description of the present disclosure and should not be regarded as a limitation thereof. Although several exemplary embodiments of the present disclosure have been described, it will be readily understood by those skilled in the art that many modifications may be made to the exemplary embodiments without departing from the novel teaching and advantages of the present disclosure. Therefore, all such modifications are intended to be included in the scope of the present disclosure as defined by the claims. It should be understood that the above is a description of the present disclosure, and the present disclosure should not be considered to be limited to the specific embodiments disclosed; moreover, modifications to the disclosed embodiments and other embodiments are intended to be included within the scope of the present disclosure.

## Claims

1. A torque limiter (100), **characterized in that** the torque limiter (100) comprises:
a flywheel (60);
a first axial load-bearing portion;
a second axial load-bearing portion, which is fixed relative to the first axial load-bearing portion in an axial direction and is spaced therefrom by a certain distance;
a torque input plate (10), which is fixed relative to the flywheel (60) in a circumferential direction and drives the flywheel (60) to rotate integrally about a rotation axis (X); and
a driven plate (20), configured to output torque,
wherein the torque input plate (10) and the driven plate (20) are axially arranged between the first axial load-bearing portion and the second axial load-bearing portion, with the torque input plate (10) being arranged closer to the first axial load-bearing portion, and the driven plate (20) being arranged closer to the second axial load-bearing portion, and
wherein the torque input plate (10) and the driven plate (20) abut against each other with a certain axial force, and the torque input plate (10) drives the driven plate (20) to rotate about the rotation axis (X) by means of friction between the torque input plate (10) and the driven plate (20).

2. The torque limiter (100) according to claim 1, **characterized in that**:
the torque limiter (100) further comprises an elastic member (30) axially arranged between the first axial load-bearing portion and the second axial load-bearing portion, and the elastic member (30) biases one of the torque input plate (10) and the driven plate (20) toward the other of the torque input plate (10) and the driven plate (20).

3. The torque limiter (100) according to claim 2, **characterized in that**:
the torque input plate (10) comprises a plurality of transmission teeth (11) extending radially outward or axially from an outer periphery thereof, and the torque input plate (10) drives the flywheel (60) through the transmission teeth (11).

4. The torque limiter (100) according to claim 3, **characterized in that**:
the torque input plate (10) comprises an inner plate (10a) and an outer plate (10b) fastened together, the outer plate (10b) is located on a radially outer side of the inner plate (10a), and the transmission teeth (11) are located at an outer periphery of the outer plate (10b).

5. The torque limiter (100) according to claim 3, **characterized in that**:
the elastic member (30) is arranged between the first axial load-bearing portion and the torque input plate (10); or
the elastic member (30) is arranged between the driven plate (20) and the second axial load-bearing portion.

6. The torque limiter (100) according to claim 3, **characterized in that**:
the torque limiter (100) further comprises a friction lining (21) arranged on at least one of two axial sides adjacent to the driven plate (20).

7. The torque limiter (100) according to any one of claims 3 to 6, **characterized in that**: the torque limiter (100) further comprises an intermediate plate (40), and the intermediate plate (40) comprises:
a first ring (41), wherein the first ring (41) is fastened to the flywheel (60), and
a plurality of connecting strips (43), wherein the connecting strips (43) are integrally formed with the first ring (41),
wherein at least a portion of the connecting strip (43) extends axially, and the transmission teeth (11) of the torque input plate (10) are able to be inserted between two adjacent connecting strips (43).

8. The torque limiter (100) according to claim 7, **characterized in that**:
the first ring (41) comprises a ring body (41a) and a plurality of first teeth (44), and each first tooth (44) is arranged in a circumferential direction between two adjacent connecting strips (43).

9. The torque limiter (100) according to claim 8, **characterized in that**:
the ring body (41a) is fastened to the flywheel (60), and the first teeth (44) are arranged on an inner periphery of the ring body (41a) and form one of the first axial load-bearing portion or the second axial load-bearing portion of the torque limiter (100).

10. The torque limiter (100) according to claim 8, **characterized in that**:
the first teeth (44) are arranged on an outer periphery of the ring body (41a) and fastened to the flywheel (60), and the ring body (41a) forms one of the first axial load-bearing portion or the second axial load-bearing portion of the torque limiter (100).

11. The torque limiter (100) according to any one of claims 8 to 10, **characterized in that**:
the first teeth (44) are spaced from the ring body (41a) in an axial direction by a certain distance, and are connected to the ring body (41a) through bent portions (45).

12. The torque limiter (100) according to claim 8 or 9, **characterized in that**:
the intermediate plate (40) further comprises a second ring (42), the second ring (42) is spaced from the first ring (41) in an axial direction by a certain distance and integrally formed with the connecting strips (43), and the second ring (42) forms the other of the first axial load-bearing portion and the second axial load-bearing portion of the torque limiter (100).

13. The torque limiter (100) according to claim 10, **characterized in that**:
the connecting strip (43) comprises a radial extension section, the radial extension section is spaced from the first ring (41) in an axial direction by a certain distance, and the radial extension section forms the other of the first axial load-bearing portion and the second axial load-bearing portion of the torque limiter (100).

14. The torque limiter (100) according to any one of claims 3 to 6, **characterized in that**:
the flywheel (60) comprises a body portion (61) and a flange portion (62) extending radially inward from the body portion (61), and the flange portion (62) forms one of the first axial load-bearing portion or the second axial load-bearing portion of the torque limiter (100).

15. The torque limiter (100) according to claim 14, **characterized in that**:
the flywheel (60) further comprises a support protrusion (63) extending radially inward from the body portion (61), the support protrusion (63) is spaced from the flange portion (62) in an axial direction by a certain distance, and the support protrusion (63) forms the other of the first axial load-bearing portion or the second axial load-bearing portion of the torque limiter (100).

16. The torque limiter (100) according to claim 14, **characterized in that**:
the torque limiter (100) further comprises a carrier plate (50) fastened together with the flywheel (60), the carrier plate (50) is spaced from the flange portion (62) in an axial direction by a certain distance, and the carrier plate (50) forms the other of the first axial load-bearing portion or the second axial load-bearing portion of the torque limiter (100).

17. The torque limiter (100) according to any one of claims 14 to 16, **characterized in that**:
the flywheel (60) comprises connecting holes (64) arranged on the flange portion (62), and the transmission teeth (11) extend axially from the outer periphery of the torque input plate (10) and are able to be inserted into the connecting holes (64), so that the torque input plate (10) is fixed relative to the flywheel (60) in a circumferential direction.

18. The torque limiter (100) according to any one of claims 14 to 16, **characterized in that**:
the flywheel (60) comprises connecting grooves (65) arranged on an inner periphery of the body portion (61), and the transmission teeth (11) extend radially from the outer periphery of the torque input plate (10) and are able to be inserted into the connecting groove (65), so that the torque input plate (10) is fixed relative to the flywheel (60) in a circumferential direction.

19. The torque limiter (100) according to claim 15, **characterized in that**:
at least one of the plurality of support protrusions (63) is provided with an anti-rotation groove (66).

20. The torque limiter (100) according to claim 19, **characterized in that**:
the elastic member (30) has a plurality of outer peripheral teeth (31), each outer peripheral tooth (31) is supported by one support protrusion (63), and one outer peripheral tooth (31) among the outer peripheral teeth (31) presses against a bottom surface of the anti-rotation groove (66).

21. The torque limiter (100) according to claim 20, **characterized in that**:
the outer peripheral teeth (31) of the elastic member (30) have dimensions that enable the outer peripheral teeth to pass through space between adjacent support protrusions (63) in an axial direction, and the elastic member (30) is able to rotate by an angle in a circumferential direction during assembly, so that the outer peripheral teeth (31) are supported on the support protrusions (63).

22. The torque limiter (100) according to claim 15, **characterized in that**:
the transmission teeth (11) extend radially from the outer periphery of the torque input plate (10), each transmission tooth (11) is supported by one support protrusion (63), and one transmission tooth (11) among the plurality of transmission teeth (11) presses against a bottom surface of the anti-rotation groove (66).

23. The torque limiter (100) according to claim 22, **characterized in that**:
the transmission teeth (11) have dimensions that enable the transmission teeth to pass through space between adjacent support protrusions (63) in an axial direction, and the torque input plate (10) is able to rotate by an angle in a circumferential direction during assembly, so that the transmission teeth (11) are supported on the support protrusions (63).

24. The torque limiter (100) according to any one of claims 3 to 6, **characterized in that**:
the torque limiter (100) further comprises two carrier plates (50) that are fastened together with the flywheel (60) on two axial sides of the flywheel (60), respectively, and the two carrier plates (50) form a first load-bearing portion and a second load-bearing portion of the torque limiter (100), respectively.

25. The torque limiter (100) according to claim 24, **characterized in that**:
at least one of the two carrier plates (50) is provided with transmission holes, and the transmission teeth (11) extend axially from the outer periphery of the torque input plate (10) and are able to be inserted into the transmission holes, so that the torque input plate (10) is fixed relative to the flywheel (60) in a circumferential direction.

26. The torque limiter (100) according to claim 24, **characterized in that**:
the flywheel (60) comprises connecting grooves (65) arranged on an inner periphery of the body portion (61) thereof, and the transmission teeth (11) extend radially from the outer periphery of the torque input plate (10) and are able to be inserted into the connecting grooves (65), so that the torque input plate (10) is fixed relative to the flywheel (60) in a circumferential direction.

27. A drive assembly (1), **characterized in that** the drive assembly (1) comprises:
the torque limiter (100) according to any one of claims 1 to 26, and
a torsional vibration damper (200), wherein the torsional vibration damper (200) comprises an input portion (210), an output portion (220), and a spring (230) arranged to be circumferentially compressed between the input portion (210) and the output portion (220),
wherein the input portion (210) of the torsional vibration damper (200) is fastened together with the driven plate (20) of the torque limiter (100), or the input portion (210) of the torsional vibration damper (200) is integrally formed with the driven plate (20) of the torque limiter (100).

28. The drive assembly (1) according to claim 27, **characterized in that**:
the torsional vibration damper (200) comprises a through hole (201), and a fastener is allowed to pass through the through hole (201) to fasten the torque input plate (10) of the torque limiter (100) to an upstream component of the drive assembly.

29. A vehicle, comprising the drive assembly (1) according to claim 27 or 28.
